# EUROPÄISCHE PATENTSCHRIFT

(11) **EP 3 123 832 B1**
(45) Veröffentlichungstag und Bekanntmachung des Hinweises auf die Patenterteilung: **24.07.2019**
(21) Anmeldenummer: 15713172.3
(22) Anmeldetag: 26.03.2015
(51) Int. Cl.: F21S 8/02, F21S 8/04, H05B 37/02

(54) **BELEUCHTUNGSSYSTEM UND VERFAHREN ZUR ANSTEUERUNG EINES BELEUCHTUNGSSYSTEMS**
LIGHTING SYSTEM AND METHOD FOR CONTROLLING A LIGHTING SYSTEM
SYSTÈME D'ÉCLAIRAGE ET PROCÉDÉ DE COMMANDE D'UN SYSTÈME D'ÉCLAIRAGE

(30) Priorität: 27.03.2014 DE 102014205761
(43) Veröffentlichungstag der Anmeldung: 01.02.2017
(73) Patentinhaber: Zumtobel Lighting GmbH, 6850 Dornbirn (AT)
(72) Erfinder: PETSCHULAT, Manfred, 6922 Wolfurt (AT); SCHUBNELL, Sebastian, 88079 Kressbronn (DE)
(74) Vertreter: Thun, Clemens
(86) Internationale Anmeldenummer: PCT/EP2015/056537
(87) Internationale Veröffentlichungsnummer: WO 2015/144817

(56) Entgegenhaltungen:
- WO-A1-2011/039690
- WO-A1-2012/129243
- WO-A1-2013/057644
- US-A- 5 668 446
- US-A1- 2007 185 675

## Beschreibung

Die Erfindung betrifft ein Beleuchtungssystem zur Beleuchtung eines Raums, sowie ein Verfahren zur Ansteuerung eines solchen Beleuchtungssystems.

Von der Anmelderin wird eine Deckenleuchte zur Beleuchtung eines Raums unter der Bezeichnung "Mildes Licht" vertrieben. Mit dieser Leuchte lässt sich einerseits eine Aufhellung eines Deckenbereichs erzielen und andererseits lokal ein Arbeitsbereich direkt beleuchten. Zur Steuerung der Leuchte ist dabei vorgesehen, dass die Beleuchtung des Deckenbereichs durch Dimmen reduziert wird, wenn durch das Tageslicht der Arbeitsbereich ausreichend beleuchtet ist. Dies kann dazu führen, dass der Deckenbereich vergleichsweise dunkel erscheint, so dass dadurch bei einer in dem Raum befindlichen Person eine negative Stimmung ausgelöst wird.

Aus der WO 2011/039690 A1 ist ein Beleuchtungssystem zur Beleuchtung eines Raums bekannt, das Leuchten zur Erzeugung einer Raumaufhellung und zur Erzeugung einer konzentrierten lokalen Beleuchtung aufweist. Weiterhin umfasst das System einen Anwesenheitssensor sowie eine Steuervorrichtung zur Ansteuerung der Leuchten, wobei die Raumaufhellung tageslichtabhängig gesteuert wird und die lokale Beleuchtung anwesenheitsabhängig.

Die Schriften WO 2012/129243 A1 und WO 2013/057644 A1 zeigen weitere Beleuchtungssystem mit Sensoren.

Der Erfindung liegt die Aufgabe zugrunde, ein entsprechendes verbessertes Beleuchtungssystem und ein verbessertes Verfahren zur Ansteuerung eines entsprechenden Beleuchtungssystems anzugeben. Insbesondere soll mit dem Beleuchtungssystem bzw. mit dem Verfahren erzielbar sein, bei einer insgesamt energieeffizienten Nutzung eine besonders positive Lichtwirkung zu erzeugen.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Beleuchtungssystem zur Beleuchtung eines Raumes vorgesehen, das Mittel zur Erzeugung einer großflächigen Raumaufhellung aufweist, sowie Mittel zur Erzeugung einer konzentrierten, lokalen Beleuchtung. Weiterhinweist das Beleuchtungssystem eine Anwesenheits-Erfassungseinrichtung zur Erfassung einer Anwesenheit wenigstens einer Person in dem Raum auf und eine Steuervorrichtung zur Ansteuerung der Mittel zur Erzeugung der Raumaufhellung und der Mittel zur Erzeugung der lokalen Beleuchtung. Dabei ist die Steuervorrichtung dazu ausgestaltet, die großflächige Raumaufhellung automatisch tageslichtabhängig oder tageszeitabhängig anzusteuern und die lokale Beleuchtung automatisch in Abhängigkeit von der Anwesenheit wenigstens einer Person in dem Raum anzusteuern.

Dadurch, dass die Raumaufhellung automatisch in Abhängigkeit des Tageslichts bzw. der Tageszeit gesteuert wird, lässt sich vermeiden, dass die Aufhellung so stark reduziert wird, dass eine negativ wirkende Lichtstimmung entsteht. Dennoch lässt sich das Beleuchtungssystem energetisch vorteilhaft ansteuern, insbesondere, da sich die lokale Beleuchtung in Abhängigkeit von der Anwesenheit von Personen in dem Raum steuern lässt.

Erfindungsgemäß sind dabei die Mittel zur Erzeugung der Raumaufhellung dazu ausgestaltet, eine großflächige Lichtabgabe von einem Deckenbereich des Raums zu erzeugen, wobei die Mittel zur Erzeugung der lokalen Beleuchtung dazu ausgestaltet sind, in wenigstens einem von mehreren, unterhalb des Deckenbereichs befindlichen Teilbereichen eine Arbeitsbeleuchtung zu erzeugen. Durch die Aufhellung des Deckenbereichs lässt sich im Allgemeinen eine besonders vorteilhafte Wirkung des Lichts auf das Befinden oder die Stimmung einer in dem Raum anwesenden Person erzielen.

Vorzugsweise ist die Anwesenheits-Erfassungseinrichtung dazu ausgestaltet, zu erfassen, ob wenigstens eine Person in wenigstens einem der Teilbereiche anwesend ist und, falls ja, in welchem bzw. in welchen der Teilbereiche, wobei die Gestaltung weiterhin wie folgt ist: die Mittel zur Erzeugung der lokalen Beleuchtung werden so angesteuert, dass lediglich derjenige der Teilbereiche beleuchtet wird, in dem wenigstens eine Person anwesend ist bzw. gegebenenfalls lediglich diejenigen der Teilbereiche beleuchtet werden, in denen wenigstens eine Person anwesend ist. Hierdurch lässt sich ein besonders großes Energiesparpotenzial erzielen. Insbesondere ist hierzu weiterhin vorzugsweise die Gestaltung weiterhin wie folgt: die Mittel zur Erzeugung der lokalen Beleuchtung bleiben deaktiviert, solange keine Person in wenigstens einem der Teilbereiche anwesend ist.

Erfindungsgemäß weist das Beleuchtungssystem weiterhin eine Tageslicht-Erfassungseinrichtung zur Erfassung einer Intensität eines in dem Raum vorhandenen Tageslichts auf, wobei die Ansteuerung der Mittel zur Erzeugung der lokalen Beleuchtung wie folgt ist: die Mittel zur Erzeugung der lokalen Beleuchtung bleiben aktiviert, solange wenigstens eine Person in wenigstens einem der Teilbereiche anwesend ist und dabei die Intensität des Tageslichts einen Schwellenwert unterschreitet und bleiben deaktiviert, solange die Intensität des Tageslichts den Schwellenwert überschreitet. Hierdurch lässt sich eine nochmals verbesserte Energieeinsparung erzielen.

Ferner sind die Mittel zur Erzeugung der Raumaufhellung dazu ausgestaltet, die Raumaufhellung in unterschiedlichen Intensitäten zu erzeugen, wobei die Steuervorrichtung dazu ausgebildet ist, die Mittel zur Erzeugung der Raumaufhellung so anzusteuern, dass mit zunehmender Intensität des Tageslichts die Raumaufhellung mit zunehmender Intensität erzeugt wird. Hierdurch lässt sich eine besonders positiv wirkende Stimmungsbeeinflussung durch die Raumaufhellung erzielen.

Vorzugsweise sind die Mittel zur Erzeugung der Raumaufhellung weiterhin dazu ausgestaltet, die Raumaufhellung in unterschiedlichen Farbtemperaturen zu erzeugen, wobei die Tageslicht-Erfassungseinrichtung weiterhin zur Erfassung einer Farbtemperatur des Tageslichts ausgestaltet ist und wobei die Gestaltung weiterhin wie folgt ist: die Mittel zur Erzeugung der Raumaufhellung werden weiterhin so angesteuert, dass mit zunehmender Farbtemperatur des Tageslichts die Raumaufhellung mit zunehmender Farbtemperatur erzeugt wird. Durch diese Wahl der Farbtemperatur der Raumaufhellung lässt sich Letztere in ihrer Wirkung besonders gut an das Tageslicht anpassen.

Dabei sind die Mittel zur Erzeugung der lokalen Beleuchtung außerdem weiterhin vorteilhaft dazu ausgestaltet, die lokale Beleuchtung in unterschiedlichen Farbtemperaturen zu erzeugen, wobei die Gestaltung weiterhin wie folgt ist: die Mittel zur Erzeugung der lokalen Beleuchtung werden weiterhin so angesteuert, dass mit zunehmender Farbtemperatur des Tageslichts die lokale Beleuchtung mit zunehmender Farbtemperatur erzeugt wird. Hierdurch lässt sich auch die Wirkung der lokalen Beleuchtung besonders gut an diejenige des Tageslichts anpassen.

Gemäß einem weiteren Aspekt der Erfindung ist ein Verfahren zur Ansteuerung eines Beleuchtungssystems zur Beleuchtung eines Raumes vorgesehen, aufweisend die folgenden Schritte a) Erfassen, ob wenigstens eine Person in dem Raum anwesend ist, b) Ansteuern von Mitteln zur Erzeugung einer großflächigen Raumaufhellung, welche dazu ausgestaltet sind, eine großflächige Lichtabgabe von einem Deckenbereich das Raums zu erzeugen und die Raumaufhellung in unterschiedlichen Intensitäten zu erzeugen, sowie von Mitteln zur Erzeugung einer konzentrierten, lokalen Beleuchtung, wobei die großflächige Raumaufhellung automatisch tageslichtabhängig oder tageszeitabhängig angesteuert wird und die lokale Beleuchtung automatisch in Abhängigkeit von der Anwesenheit wenigstens einer Person in dem Raum angesteuert wird.

Dadurch, dass die Raumaufhellung automatisch in Abhängigkeit des Tageslichts bzw. der Tageszeit gesteuert wird, lässt sich vermeiden, dass die Aufhellung so stark reduziert wird, dass eine negative Lichtstimmung entsteht. Dennoch lässt sich eine energetisch besonders vorteilhafte Ansteuerung erzielen, da sich die lokale Beleuchtung in Abhängigkeit von der Anwesenheit von Personen in dem Raum steuern lässt.

Vorteilhaft mit Bezug auf die energetische Nutzung sind dabei erfindungsgemäß die Mittel zur Erzeugung der lokalen Beleuchtung dazu ausgestaltet, in wenigstens einem von mehreren, unterhalb eines Deckenbereichs des Raumes befindlichen Teilbereichen eine Arbeitsbeleuchtung zu erzeugen, wobei die Mittel zur Erzeugung der lokalen Beleuchtung so angesteuert werden, dass lediglich derjenige der Teilbereiche beleuchtet wird, in dem die wenigstens eine Person anwesend ist bzw. gegebenenfalls lediglich diejenigen der Teilbereiche beleuchtet werden, in denen die wenigstens eine Person anwesend ist. Insbesondere bleiben hierzu vorzugsweise die Mittel zur Erzeugung der lokalen Beleuchtung deaktiviert, solange keine Person in wenigstens einem der Teilbereiche anwesend ist.

Erfindungsgemäß wird weiterhin eine Intensität eines in dem Raum vorhandenen Tageslichts erfasst, wobei die Mittel zur Erzeugung der lokalen Beleuchtung aktiviert bleiben, solange wenigstens eine Person in wenigstens einem der Teilbereiche anwesend ist und dabei die Intensität des Tageslichts einen Schwellenwert unterschreitet und deaktiviert bleiben, solange die Intensität des Tageslichts den Schwellenwert überschreitet. Dabei werden weiterhin erfindungsgemäß die Mittel zur Erzeugung der Raumaufhellung so angesteuert, dass mit zunehmender Intensität des Tageslichts die Raumaufhellung mit zunehmender Intensität erzeugt wird.

Vorzugsweise wird weiterhin eine Farbtemperatur des in dem Raum vorhandenen Tageslichts erfasst, wobei die Mittel zur Erzeugung der Raumaufhellung weiterhin so angesteuert werden, dass mit zunehmender Farbtemperatur des Tageslichts die Raumaufhellung mit zunehmender Farbtemperatur erzeugt wird.

Vorzugsweise werden die Mittel zur Erzeugung der lokalen Beleuchtung weiterhin so angesteuert, dass mit zunehmender Farbtemperatur des Tageslichts die lokale Beleuchtung mit zunehmender Farbtemperatur erzeugt wird.

Die Erfindung wird im Folgenden anhand eines Ausführungsbeispiels und mit Bezug auf die Zeichnungen näher erläutert. Es zeigen:
- Fig. 1: eine schematische Skizze zu einem erfindungsgemäßen Beleuchtungssystem zur Beleuchtung eines Raums,
- Fig. 2a: eine schematische Skizze des Raums mit mehreren anwesenden Personen,
- Fig. 2b: eine schematische Skizze des Raums mit lediglich einer anwesenden Person,
- Fig. 2c: eine schematische Skizze des Raums ohne eine anwesende Person,
- Fig. 3a: eine schematische Skizze des Raums mit mehreren anwesenden Personen, wobei eine tageslichtabhängige Ansteuerung des Beleuchtungssystems vorgesehen ist,
- Fig. 3b: eine schematische Skizze des Raums mit einer anwesenden Person, die durch eine Anwesenheits-Erfassungseinrichtung erfasst wird und
- Fig. 3c: eine schematische Skizze des Raums mit einer Anwesenheits-Erfassungseinrichtung, ohne anwesende Person.

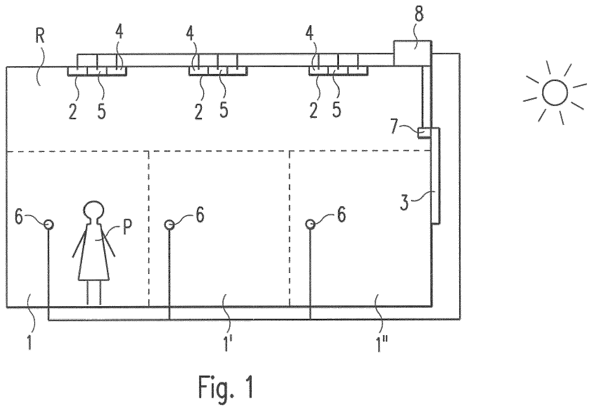

Fig. 1 zeigt eine schematische Skizze zu einem erfindungsgemäßen Beleuchtungssystem zur Beleuchtung eines Raums *R.* Bei dem Raum *R* kann es sich beispielsweise um einen großen Raum handeln, der mehrere Arbeitsbereiche aufweist bzw. in mehrere Arbeitsbereiche unterteilt ist. Beispielsweise kann an jedem der Arbeitsbereiche ein Arbeitsplatz vorgesehen sein. Bei dem Raum *R* kann es sich beispielsweise um ein Großraumbüro oder um ein Klassenzimmer oder dergleichen handeln.

Das Beleuchtungssystem umfasst Mittel 4 zur Erzeugung einer großflächigen Raumaufhellung. Diese können insbesondere dazu ausgestaltet sein, eine großflächige Lichtabgabe von einem Deckenbereich 2 des Raums *R* zu erzeugen. Bei dem Deckenbereich 2 kann es sich insbesondere um die gesamte Deckenfläche des Raums *R* handeln oder um einen Teilbereich der wenigstens 50% der gesamten Deckenfläche des Raums *R* umfasst.

Auch können die Mittel 4 zur Erzeugung der Raumaufhellung vorteilhaft dazu ausgestaltet sein, zusätzlich einen seitlichen Wandbereich und/oder einen Bodenbereich des Raums 3 aufzuhellen.

Weiterhin umfasst das Beleuchtungssystem Mittel 5 zur Erzeugung einer konzentrierten, lokalen Beleuchtung 5. Diese können insbesondere dazu ausgestaltet sein, in wenigstens einem von mehreren, unterhalb des Deckenbereiches 2 befindlichen Teilbereichen 1, 1', 1" des Raums *R* eine Arbeitsbeleuchtung oder Arbeitsplatzbeleuchtung zu erzeugen. Beispielsweise kann jeder der Teilbereiche 1, 1', 1" genau einen der Arbeitsbereiche umfassen.

Insbesondere können die Mittel 5 zur Erzeugung der lokalen Beleuchtung 5 dazu ausgestaltet sein, unabhängig voneinander in jedem der Teilbereiche 1, 1', 1" eine Arbeitsbeleuchtung bzw. Arbeitsplatzbeleuchtung zu erzeugen.

Das Beleuchtungssystem ist dementsprechend dazu ausgebildet, Licht in zwei unterschiedlichen Arten abzugeben. Dabei ist für die Raumaufhellung eine eher weniger intensive, jedoch großflächigere Lichterzeugung vorgesehen und für die lokale Beleuchtung eine kleinräumigere, jedoch intensivere Lichterzeugung, insbesondere eine Beleuchtung, mit der jeder Arbeitsplatz unabhängig von den restlichen Arbeitsplätzen beleuchtet werden kann.

Weiterhin umfasst das Beleuchtungssystem eine Anwesenheits-Erfassungseinrichtung 6 zur Erfassung einer Anwesenheit einer Person *P* in dem Raum *R.*

Weiterhin umfasst das Beleuchtungssystem eine Steuervorrichtung 8 zur Ansteuerung der Mittel 4 zur Erzeugung der Raumaufhellung und der Mittel 5 zur Erzeugung der lokalen Beleuchtung.

Die Steuervorrichtung 8 ist dazu ausgestaltet, die großflächige Raumaufhellung automatisch tageslichtabhängig oder tageszeitabhängig anzusteuern und die lokale Beleuchtung automatisch in Abhängigkeit von der Anwesenheit wenigstens einer Person *P* in dem Raum *R.* Beim hier gezeigten Beispiel ist die Anwesenheits-Erfassungs-Einrichtung 6 hierzu vorteilhaft dazu ausgestaltet, zu erfassen, ob wenigstens eine Person *P* in wenigstens einem der Teilbereiche 1, 1 ', 1" anwesend ist und, falls ja, in welchem der Teilbereiche 1, 1', 1" bzw. gegebenenfalls in welchen der Teilbereiche 1, 1', 1". Dabei kann der Raum *R* derart vollständig in die Teilbereiche 1, 1', 1" unterteilt sein, dass sich mit der Anwesenheits-Erfassungseinrichtung 6 erfassen lässt, ob eine Person *P* in dem Raum *R* anwesend ist.

Insbesondere ist die Steuervorrichtung 8 dazu ausgestaltet, die Mittel 4 zur Erzeugung der Raumaufhellung unabhängig von den Mitteln 5 zur Erzeugung der lokalen Beleuchtung anzusteuern.

Dabei ist die Steuervorrichtung 8 weiterhin so gestaltet, dass die Mittel 5 zur Erzeugung der lokalen Beleuchtung so angesteuert werden, dass lediglich derjenige der Teilbereiche 1, 1', 1" beleuchtet wird, in dem wenigstens eine Person *P* anwesend ist bzw. gegebenenfalls lediglich diejenigen Teilbereiche 1, 1', 1", beleuchtet werden, in denen wenigstens eine Person *P* anwesend ist. Die Steuervorrichtung 8 ist dementsprechend vorteilhaft mit der Anwesenheits-Erfassungseinrichtung 6 zur entsprechenden Informationsübertragung verbunden.

Insbesondere kann also die Gestaltung so sein, dass die Ansteuerung der Mittel 4 zur Erzeugung der Raumaufhellung unabhängig davon erfolgt, ob sich eine Person *P* in dem Raum *R* bzw. in einem der Teilbereiche 1, 1', 1" aufhält oder ob sich mehrere Personen *P* in dem Raum *R* bzw. in einem der Teilbereiche 1, 1', 1" aufhalten.

Selbstverständlich kann darüber hinaus energetisch vorteilhaft vorgesehen sein, dass die Mittel 4 zur Erzeugung der Raumaufhellung deaktiviert werden, wenn sich niemand in dem Raum *R* bzw. in einem der Teilbereiche 1, 1', 1" aufhält und auch solange deaktiviert bleiben, solange dieser Zustand besteht.

Im gezeigten Beispiel umfasst die Anwesenheits-Erfassungseinrichtung 6 Anwesenheitssensoren, mit deren Hilfe erfasst werden kann, ob sich eine Person in einem der Teilbereiche 1, 1', 1" befindet und gegebenenfalls in welchem der Teilbereiche 1, 1', 1" sie sich befindet. Beispielsweise kann hierzu in jedem der Teilbereiche 1, 1', 1" genau einer der Anwesenheitssensoren vorgesehen sein.

Energetisch vorteilhaft ist zur Ansteuerung vorgesehen, dass die Mittel 5 zur Erzeugung der lokalen Beleuchtung deaktiviert bzw. ausgeschaltet bleiben, solange keine Person in wenigstens einem der Teilbereiche 1, 1', 1" anwesend ist.

Beim gezeigten Beispiel umfasst das Beleuchtungssystem weiterhin eine Tageslicht-Erfassungseinrichtung 7, beispielsweise in Form eines Lichtsensors, zur Erfassung eines gegebenenfalls in dem Raum *R* vorhandenen Tageslichts. Dabei ist die Gestaltung der Steuerung so, dass die Mittel 5 zur Erzeugung der lokalen Beleuchtung aktiviert bleiben, solange wenigstens eine Person in wenigstens einem der Teilbereiche 1, 1', 1" anwesend ist und dabei die Intensität des Tageslichts einen Schwellenwert unterschreitet. Solange jedoch die Intensität des Tageslichts den Schwellenwert überschreitet, bleiben die Mittel 5 zur Erzeugung der lokalen Beleuchtung deaktiviert. Dies ist energetisch vorteilhaft.

Der Schwellenwert ist dementsprechend vorzugsweise so festgelegt, dass an jedem der Arbeitsplätze ein, für eine Arbeit, beispielsweise eine Lese- oder Schreibarbeit geeignet helles Licht vorhanden ist, wenn die Intensität des Tageslichts über dem Schwellenwert liegt.

Weiterhin vorzugsweise sind die Mittel 4 zur Erzeugung der Raumaufhellung dazu ausgestaltet, die Raumaufhellung in unterschiedlichen Intensitäten zu erzeugen, wobei die Mittel 4 zur Erzeugung der Raumaufhellung so angesteuert werden, dass mit zunehmender Intensität des Tageslichts die Raumaufhellung mit zunehmender Intensität erzeugt wird. Insbesondere kann vorgesehen sein, dass die Ansteuerung derart ist, dass mit den Mitteln 4 zur Erzeugung der Raumaufhellung das Tageslicht in seiner Intensität "nachgebildet" wird.

Durch die Aktivierung der Mittel 4 zur Erzeugung der Raumaufhellung lässt sich insbesondere vermeiden, dass für den Fall, in dem nur ein Arbeitsplatz beleuchtet ist oder nur ein kleiner Teil der Arbeitsplätze beleuchtet ist, der Raum *R* als "dunkle Höhle" erscheint.

Ähnlich kann weiterhin vorgesehen sein, dass die Mittel 4 zur Erzeugung der Raumaufhellung weiterhin dazu ausgestaltet sind, die Raumaufhellung in unterschiedlichen Farbtemperaturen zu erzeugen, wobei die Tageslicht-Erfassungseinrichtung weiterhin zur Erfassung einer Farbtemperatur des Tageslichts ausgestaltet ist. Die Mittel 4 zur Erzeugung der Raumaufhellung werden dabei weiterhin so angesteuert, dass mit zunehmender Farbtemperatur des Tageslichts die Raumaufhellung mit zunehmender Farbtemperatur erzeugt wird. Hierdurch lässt sich besonders geeignet eine Wirkung der Raumaufhellung erzeugen, die die Wirkung des Tageslichts "nachbildet".

Auch die Mittel 5 zur Erzeugung der lokalen Beleuchtung können dazu ausgestaltet sein, die lokale Beleuchtung in unterschiedlichen Farbtemperaturen zu erzeugen, wobei die Mittel 5 zur Erzeugung der lokalen Beleuchtung weiterhin so angesteuert werden, dass mit zunehmender Farbtemperatur des Tageslichts die lokale Beleuchtung mit zunehmender Farbtemperatur erzeugt wird.

Mit dem so gestalteten Beleuchtungssystem bzw. der so gestalteten Ansteuerung desselben lässt sich somit der Energiebedarf des Systems niedrig halten und dennoch ein positiver Effekt auf das Wohlbefinden der in dem Raum R anwesenden Personen erzielen. Es lässt sich insbesondere erzielen, dass die vergleichsweise energieintensive lokale Beleuchtung nur dann abgegeben wird, wenn dies aufgrund der aktuell herrschenden Helligkeit und der Anwesenheit einer Person bzw. mehrerer Personen erwünscht ist. Die weniger intensive, großflächige Raumaufhellung wird hingegen insbesondere auch dann abgegeben, wenn mit den Mitteln zur Erzeugung der lokalen Beleuchtung nur wenige Arbeitsplätze beleuchtet werden, beispielsweise zu einer späteren Stunde in einem Großraumbüro, wenn vergleichsweise wenig Arbeitsplätze besetzt sind. Hierdurch lässt sich eine positive Raumstimmung bewirken.

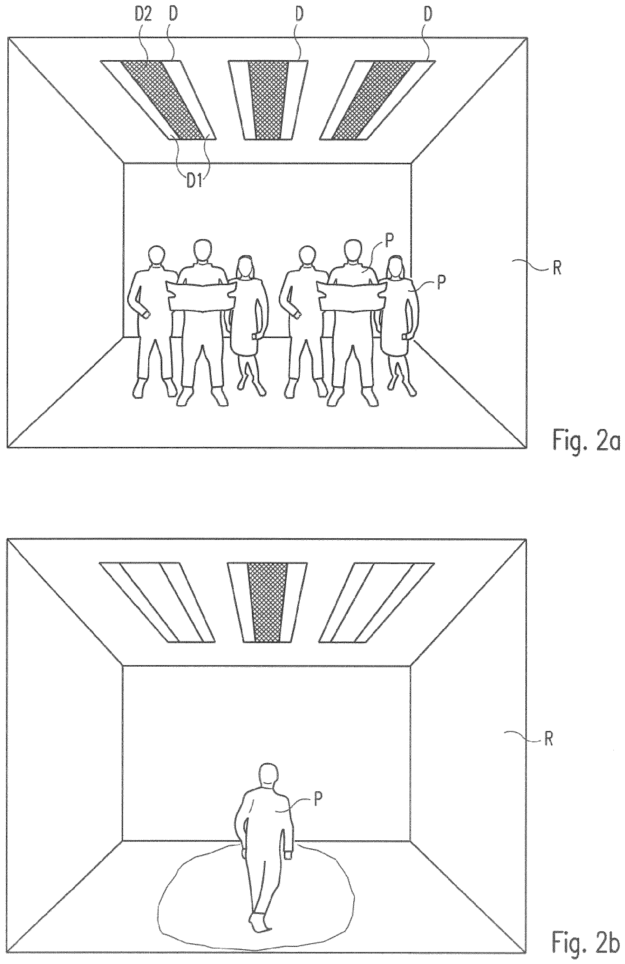

In den Figuren 2a bis 2c sind schematisch Skizzen des Raums *R* zu unterschiedlichen Beleuchtungssituationen gezeigt. In Fig. 2a ist ein Fall skizziert, in dem mehrere Personen *P* in den Raum *R* anwesend sind und dementsprechend durch die Mittel 5 zur Erzeugung der lokalen Beleuchtung mehrere Arbeitsbereiche bzw. -plätze beleuchtet sind. Wie in der Skizze angedeutet, kann die Gestaltung derart sein, dass die Mittel 4 zur Erzeugung der Raumaufhellung und die Mittel 5 zur Erzeugung der lokalen Beleuchtung durch mehrere, im skizzierten Beispiel drei Deckenleuchten *D* realisiert sind, wobei vorzugsweise jede der Deckenleuchten *D* einen ersten Lichtabgabebereich *D1* aufweist, über den das Licht zur Erzeugung der Raumaufhellung abgegeben wird und einen zweiten Lichtabgabebereich *D2,* über den das Licht zur Erzeugung der lokalen Beleuchtung abgegeben wird.

Der zweite Lichtabgabebereich *D2* kann dabei ein Teilbereich des ersten Lichtabgabebereichs *D1* darstellen. Beispielsweise kann, wie skizziert angedeutet, der erste Lichtabgabebereich *D1* länglich sein und der zweite Lichtabgabebereich *D2* durch einen ebenfalls länglichen, mittleren Teilbereich des ersten Lichtabgabebereichs *D1.*

Bei den Deckenleuchten *D* kann es sich beispielsweise um Deckenanbau- oder Deckeneinbauleuchten handeln. Grundsätzlich kann für das Beleuchtungssystem jedoch auch vorgesehen sein, dass Einzelleuchten genutzt werden, die das Licht in den beiden unterschiedlichen Arten abgeben. Das Konzept kann allerdings auch auf größere Beleuchtungsanordnungen angewendet werden, die gegebenenfalls aus mehreren, eventuell auch unterschiedlichen Leuchten bestehen.

In Fig. 2b ist der Raum *R* mit einer anwesenden Person *P* skizziert. Dementsprechend ist auch nur ein Arbeitsplatz beleuchtet, im gezeigten Beispiel durch die mittlere der drei Deckenleuchten *D.* Die beiden seitlichen Deckenleuchten *D* geben daher kein Licht zur Erzeugung einer lokalen Beleuchtung über den zweiten Lichtabgabebereich *D2* ab. Aber alle drei Deckenleuchten *D* geben ein Licht zur Erzeugung der Raumaufhellung ab.

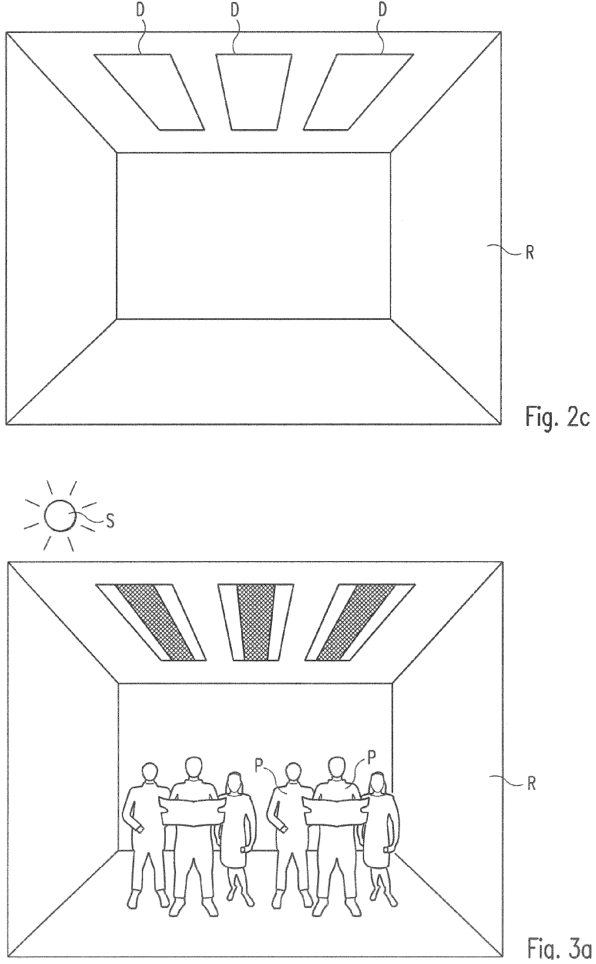

In Fig. 2c ist der Raum R ohne Person skizziert. Die drei Deckenleuchten *D* sind dementsprechend so angesteuert, dass die Mittel 5 zur Erzeugung der lokalen Beleuchtung deaktiviert sind, also kein Licht über den zweiten Lichtabgabebereich D2 zur Erzeugung einer lokalen Beleuchtung abgegeben wird.

In Fig. 3a ist eine entsprechende schematische Skizze des Raums *R* mit mehreren anwesenden Personen *P* gezeigt, wobei eine tageslichtabhängige Ansteuerung des Beleuchtungssystems vorgesehen ist, wie durch eine Sonne *S* symbolisch dargestellt.

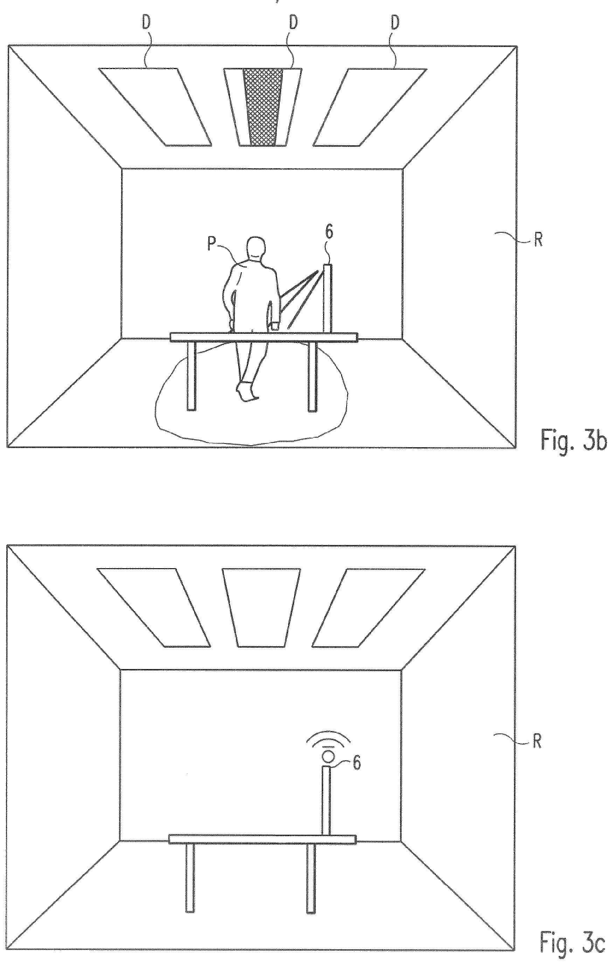

Fig. 3b zeigt eine schematische Skizze des Raums *R* mit einer anwesenden Person *P.* Die Anwesenheit der Person *P* wird über einen Anwesenheitssensor erfasst, der Teil der Anwesenheits-Erfassungseinrichtung 6 ist. Durch die Anwesenheits-Erfassungseinrichtung 6 wird außerdem erfasst, in welchem der Teilbereiche sich die Person *P* befindet; diese Information wird von der Anwesenheits-Erfassungseinrichtung 6 an die Steuervorrichtung 8 übermittelt. Durch Letztere werden dann die Mittel 5 zur Erzeugung der lokalen Beleuchtung derart aktiviert, dass eine Arbeitsbeleuchtung in demjenigen der Teilbereiche erzeugt wird, in dem sich die Person befindet. In anderen Teilbereichen, in denen keine Personen anwesend sind, wird keine Arbeitsplatzbeleuchtung erzeugt. Dementsprechend ist hier die Ansteuerung derart, dass lediglich bei einer der drei Deckenleuchten *D*, hier der mittleren Deckenleuchte, die Mittel 5 zur Erzeugung der lokalen Beleuchtung aktiviert sind.

Fig. 3c zeigt eine entsprechende Skizze, die den Raum *R* ohne Anwesenheit einer Person zeigt. Durch die Anwesenheits-Erfassungseinrichtung 6 lässt sich erfassen, dass sich keine Person in einem der Teilbereiche befindet, insbesondere, dass sich keine Person *P* in dem Raum R befindet.

## Patentansprüche

1. Beleuchtungssystem zur Beleuchtung eines Raumes (*R*), aufweisend
- Mittel (4) zur Erzeugung einer großflächigen Raumaufhellung und
- Mittel (5) zur Erzeugung einer konzentrierten, lokalen Beleuchtung,
- eine Anwesenheits-Erfassungseinrichtung (6) zur Erfassung einer Anwesenheit wenigstens einer Person (*P*) in dem Raum (*R*),
- eine Steuervorrichtung (8) zur Ansteuerung der Mittel (4) zur Erzeugung der Raumaufhellung und der Mittel (5) zur Erzeugung der lokalen Beleuchtung, wobei die Steuervorrichtung (8) dazu ausgestaltet ist,
die großflächige Raumaufhellung automatisch tageslichtabhängig oder tageszeitabhängig anzusteuern und
die lokale Beleuchtung automatisch in Abhängigkeit von der Anwesenheit wenigstens einer Person (*P*) in dem Raum (*R*) anzusteuern,
wobei die Mittel (4) zur Erzeugung der Raumaufhellung dazu ausgestaltet sind, eine großflächige Lichtabgabe von einem Deckenbereich (2) des Raums (*R*) zu erzeugen und die Mittel (5) zur Erzeugung der lokalen Beleuchtung dazu ausgestaltet sind, in wenigstens einem von mehreren, unterhalb des Deckenbereichs (2) befindlichen Teilbereichen (1, 1', 1") eine Arbeitsbeleuchtung zu erzeugen,
weiterhin aufweisend
- eine Tageslicht-Erfassungseinrichtung (7) zur Erfassung einer Intensität eines in dem Raum (*R*) vorhandenen Tageslichts,
**dadurch gekennzeichnet,**
**dass** die Steuervorrichtung (8) dazu ausgebildet ist, die Mittel (5) zur Erzeugung der lokalen Beleuchtung derart anzusteuern, dass:
die Mittel (5) zur Erzeugung der lokalen Beleuchtung aktiviert bleiben, solange wenigstens eine Person (*P*) in wenigstens einem der Teilbereiche (1, 1', 1") anwesend ist und dabei die Intensität des Tageslichts einen Schwellenwert unterschreitet, und deaktiviert bleiben, solange die Intensität des Tageslichts den Schwellenwert überschreitet,
und **dass** die Mittel (4) zur Erzeugung der Raumaufhellung dazu ausgestaltet sind, die Raumaufhellung in unterschiedlichen Intensitäten zu erzeugen,
wobei die Steuervorrichtung (8) ferner dazu ausgebildet ist, die Mittel (4) zur Erzeugung der Raumaufhellung so anzusteuern, dass mit zunehmender Intensität des Tageslichts die Raumaufhellung mit zunehmender Intensität erzeugt wird.

2. Beleuchtungssystem nach Anspruch 1,
bei dem die Anwesenheits-Erfassungseinrichtung (6) dazu ausgestaltet ist, zu erfassen, ob wenigstens eine Person (*P*) in wenigstens einem der Teilbereiche (1, 1', 1") anwesend ist und, falls ja, in welchem bzw. in welchen der Teilbereiche (1, 1', 1"), wobei
die Mittel (5) zur Erzeugung der lokalen Beleuchtung so angesteuert werden,
dass lediglich derjenige der Teilbereiche (1, 1', 1") beleuchtet wird, in dem wenigstens eine Person (*P*) anwesend ist bzw. gegebenenfalls lediglich diejenigen der Teilbereiche (1, 1', 1") beleuchtet werden, in denen wenigstens eine Person (*P*) anwesend ist.

3. Beleuchtungssystem nach Anspruch 2,
wobei
die Mittel (5) zur Erzeugung der lokalen Beleuchtung deaktiviert bleiben, solange keine Person (*P*) in wenigstens einem der Teilbereiche (1, 1', 1") anwesend ist.

4. Beleuchtungsvorrichtung nach einem der vorhergehenden Ansprüche,
bei der die Mittel (4) zur Erzeugung der Raumaufhellung weiterhin dazu ausgestaltet sind, die Raumaufhellung in unterschiedlichen Farbtemperaturen zu erzeugen, wobei die Tageslicht-Erfassungseinrichtung (7) weiterhin zur Erfassung einer Farbtemperatur des Tageslichts ausgestaltet ist,
wobei
die Mittel (4) zur Erzeugung der Raumaufhellung weiterhin so angesteuert werden, dass mit zunehmender Farbtemperatur des Tageslichts die Raumaufhellung mit zunehmender Farbtemperatur erzeugt wird.

5. Beleuchtungsvorrichtung nach Anspruch 4,
bei der die Mittel (5) zur Erzeugung der lokalen Beleuchtung weiterhin dazu ausgestaltet sind, die lokale Beleuchtung in unterschiedlichen Farbtemperaturen zu erzeugen, wobei:
die Mittel (5) zur Erzeugung der lokalen Beleuchtung weiterhin so angesteuert werden, dass mit zunehmender Farbtemperatur des Tageslichts die lokale Beleuchtung mit zunehmender Farbtemperatur erzeugt wird.

6. Verfahren zur Ansteuerung eines Beleuchtungssystems zur Beleuchtung eines Raumes (*R*), aufweisend die folgenden Schritte:
a) Erfassen, ob wenigstens eine Person (*P*) in dem Raum (*R*) anwesend ist,
b) Ansteuern von Mitteln (4) zur Erzeugung einer großflächigen Raumaufhellung, welche dazu ausgestaltet sind, eine großflächige Lichtabgabe von einem Deckenbereich (2) des Raums (R) zu erzeugen und die Raumaufhellung in unterschiedlichen Intensitäten zu erzeugen, sowie von Mitteln (5) zur Erzeugung einer konzentrierten, lokalen Beleuchtung, wobei die großflächige Raumaufhellung automatisch tageslichtabhängig oder tageszeitabhängig angesteuert wird und
die lokale Beleuchtung automatisch in Abhängigkeit von der Anwesenheit wenigstens einer Person (*P*) in dem Raum (*R*) angesteuert wird,
wobei die Mittel (5) zur Erzeugung der lokalen Beleuchtung dazu ausgestaltet sind, in wenigstens einem von mehreren, unterhalb eines Deckenbereichs (2) des Raumes (*R*) befindlichen Teilbereichen (1, 1', 1") eine Arbeitsbeleuchtung zu erzeugen,
wobei die Mittel (5) zur Erzeugung der lokalen Beleuchtung so angesteuert werden, dass lediglich derjenige der Teilbereiche (1, 1', 1") beleuchtet wird, in dem die wenigstens eine Person (*P*) anwesend ist bzw. gegebenenfalls lediglich diejenigen der Teilbereiche (1, 1', 1") beleuchtet werden, in denen die wenigstens eine Person (*P*) anwesend ist,
wobei weiterhin eine Intensität eines in dem Raum (*R*) vorhandenen Tageslichts erfasst wird,
**dadurch gekennzeichnet,**
**dass** die Mittel (5) zur Erzeugung der lokalen Beleuchtung aktiviert bleiben, solange wenigstens eine Person (*P*) in wenigstens einem der Teilbereiche (1, 1', 1") anwesend ist und dabei die Intensität des Tageslichts einen Schwellenwert unterschreitet und
deaktiviert bleiben, solange die Intensität des Tageslichts den Schwellenwert überschreitet,
und **dass** die Mittel (4) zur Erzeugung der Raumaufhellung so angesteuert werden, dass mit zunehmender Intensität des Tageslichts die Raumaufhellung mit zunehmender Intensität erzeugt wird.

7. Verfahren nach Anspruch 6,
bei dem die Mittel (5) zur Erzeugung der lokalen Beleuchtung deaktiviert bleiben, solange keine Person (*P*) in wenigstens einem der Teilbereiche (1, 1', 1") anwesend ist.

8. Verfahren nach Anspruch 6 oder 7,
bei dem weiterhin eine Farbtemperatur des in dem Raum (*R*) vorhandenen Tageslichts erfasst wird,
wobei die Mittel (5) zur Erzeugung der Raumaufhellung weiterhin so angesteuert werden, dass mit zunehmender Farbtemperatur des Tageslichts die Raumaufhellung mit zunehmender Farbtemperatur erzeugt wird.

9. Verfahren nach Anspruch 8,
bei dem die Mittel (5) zur Erzeugung der lokalen Beleuchtung weiterhin so angesteuert werden, dass mit zunehmender Farbtemperatur des Tageslichts die lokale Beleuchtung mit zunehmender Farbtemperatur erzeugt wird.

## Claims

1. A lighting system for lighting a space (R), which lighting system has
- means (4) for generating a space illumination over a large area and
- means (5) for generating a concentrated, local lighting,
- a presence detector (6) for detecting a presence of at least one person (*P*) in the space (*R*),
- a control device (8) for controlling the means (4) for generating the space illumination and the means (5) for generating the local lighting,
wherein the control device (8) is configured to control the space illumination over a large area automatically as a function of the daylight or as a function of the daytime and to control the local lighting automatically as a function of the presence of at least one person (*P*) in the space (*R*),
wherein the means (4) for generating the space illumination are configured to generate a light emission over a large area from the ceiling area (2) of the space (*R*) and the means (5) for generating the local lighting are configured to generate a working illumination in at least one of several sub-regions (1, 1', 1") located below the ceiling area (2),
furthermore having
- a daylight detector (7) for detecting an intensity of a daylight present in the space (*R*),
**characterized in**
**that** the control device (8) is configured, to control the means (5) for generating the local lighting in such a manner that:
the means (5) for generating the local lighting remain activated, as long as at least one person (*P*) is present in at least one of the sub-regions (1, 1', 1") and the intensity of the daylight thereby falls below a threshold value, and remain deactivated, as long as the intensity of the daylight exceeds the threshold value, and that the means (4) for generating the space illumination is configured to generate the space illumination in different intensities, wherein the control device (8) is further configured to control the means (4) for generating the space illumination so that with increasing intensity of the daylight the space illumination is generated with increasing intensity.

2. A lighting system according to Claim 1,
in which the presence detector (6) is configured to detect whether at least one person (*P*) is present in at least one of the sub-regions (1, 1', 1") and, if yes, in which or in which of the sub-regions (1, 1', 1"), wherein
the means (5) for generating the local lighting are controlled so that only one of the sub-regions (1, 1', 1") is illuminated, in which at least one person (*P*) is present or, is applicable, only those sub-regions (1, 1', 1") are illuminated, in which at least one person (*P*) is present.

3. A lighting system according to Claim 2,
wherein
the means (5) for generating the local lighting remain deactivated, as long as no person (*P*) is present in at least one of the sub-regions (1, 1', 1").

4. A lighting device according to any one of the preceding claims,
in which the means (4) for generating the space illumination are furthermore configured to generate the space illumination in different color temperatures, wherein the daylight detector (7) is furthermore configured to detect a color temperature of the daylight,
wherein
the means (4) for generating the space illumination are furthermore controlled such that with increasing color temperature of the daylight the space illumination is generated with increasing color temperature.

5. A lighting device according to Claim 4,
in which the means (5) for generating the local lighting are furthermore configured to generate the local lighting in different color temperatures, wherein:
the means (5) for generating the local lighting are furthermore controlled so that with increasing color temperature of the daylight the local lighting is generated with increasing color temperature.

6. A method for controlling a lighting system for lighting a space (*R*), having the following steps:
a) detection of whether at least one person (*P*) is present in the space (*R*),
b) control of means (4) for generating a space illumination over a large area, which are configured to generate a light emission over a large area from a ceiling area (2) of the space (R) and to generate the space illumination in different intensities, as well as of means (5) for generating a concentrated, local lighting, wherein the space illumination over a large area is controlled automatically as a function of daylight or as a function of daytime and the local lighting is controlled automatically as a function of the presence of at least one person (*P*) in the space (*R*),
wherein the means (5) for generating the local lighting are configured to generate a working illumination in at least one of several sub-regions (1, 1', 1") located below the ceiling area (2) of the space (*R*),
wherein the means (5) for geneating the local lighting are controlled such that only one of the sub-regions (1, 1', 1") is illuminated, in which the at least one person (*P*) is present or, if applicable, only those sub-regions (1, 1', 1") are illuminated, in which the at least one person (*P*) is present,
wherein an intensity of a daylight present in the space (*R*) is furthermore detected,
**characterized in**
**that** the means (5) for generating the local lighting remain activated, as long as at least one person (*P*) is present in at least one of the sub-regions (1, 1', 1") and the intensity of the daylight thereby falls below a threshold value and remain deactivated, as long as the intensity of the daylight exceeds the threshold value, and that the means (4) for generating the space illumination are controlled so that with increasing intensity of the daylight the space illumination is generated with increasing intensity.

7. A method according to Claim 6,
in which the means (5) for generating the local lighting remain deactivated, as long as no person (*P*) is present in at least one of the sub-regions (1, 1', 1").

8. A method according to Claim 6 or 7,
in which furthermore a color temperature of the daylight present in the space (*R*) is detected,
wherein the means (5) for generating the space illumination are furthermore controlled so that with increasing color temperature of the daylight the space illumination is generated with increasing color temperature.

9. A method according to Claim 8,
in which the means (5) for generating the local lighting are furthermore controlled, so that with increasing color temperature of the daylight the local lighting is generated with increasing color temperature.

## Revendications

1. Système d'éclairage pour l'éclairage d'une pièce (*R*), comprenant
- des moyens (4) pour la production d'un éclairage d'appoint d'une pièce sur une grande surface et
- des moyens (5) pour la production d'un éclairage local concentré,
- un dispositif de détection de présence (6) pour la détection de la présence d'au moins une personne (*P*) dans la pièce (*R*),
- un dispositif de commande (8) pour le contrôle des moyens (4) pour la production de l'éclaircissement de pièce et des moyens (5) pour la production de l'éclairage local,
le dispositif de commande (8) étant conçu
pour contrôler automatiquement, en fonction de la lumière du jour ou de l'heure du jour, l'éclairage d'appoint de la pièce sur une grande surface et
pour contrôler l'éclairage local automatiquement en fonction de la présence d'au moins une personne (*P*) dans la pièce (*R*),
les moyens (4) pour la production de l'éclairage d'appoint d'une pièce étant conçus pour générer une émission de lumière sur une grande surface à partir d'une zone du plafond (2) de la pièce (*R*) et les moyens (5) pour la production de l'éclairage local étant conçus pour générer, dans au moins une parmi plusieurs parties (1, 1', 1") se trouvant en dessous de la zone du plafond (2), un éclairage de travail,
comprenant en outre :
- un dispositif de détection de lumière du jour (7) pour la détection de l'intensité d'une lumière du jour régnant dans la pièce (*R*),
**caractérisé en ce que**
le dispositif de commande (8) est conçu pour contrôler les moyens (5) pour la production de l'éclairage local de façon à ce que :
les moyens (5) pour la production de l'éclairage local restent activés tant qu'au moins une personne (*P*) est présente dans au moins une des parties (1, 1', 1") et que l'intensité de la lumière du jour est en dessous d'une valeur seuil et restent désactivés tant que l'intensité de la lumière du jour dépasse la valeur seuil,
et **en ce que** les moyens (4) pour la production de l'éclairage d'appoint de la pièce sont conçus pour générer l'éclairage d'appoint dans différentes intensité,
le dispositif de commande (8) étant en outre conçu pour contrôler les moyens (4) pour la production de l'éclairage d'appoint de la pièce de façon à ce que, lorsque l'intensité de la lumière du jour augmente, l'éclairage d'appoint de la pièce est générée avec une intensité croissante.

2. Système d'éclairage selon la revendication 1,
dans lequel le dispositif de détection de présence (6) est conçu pour détecter su au moins une personne (*P*) est présente dans au moins une des parties (1, 1', 1") et, si oui, dans laquelle ou lesquelles des parties (1, 1', 1") elle est présente,
les moyens (5) pour la production de l'éclairage local sont contrôlés de façon à ce que seule la partie (1, 1', 1") dans laquelle au moins une personne (*P*) est présente soit éclairée ou, le cas échéant, seules les parties (1, 1', 1") dans lesquelles au moins une personne (*P*) est présente, soient éclairées.

3. Système d'éclairage selon la revendication 2,
les moyens (5) pour la production de l'éclairage local restent désactivés tant qu'aucune personne (*P*) n'est présente dans au moins une des parties (1, 1', 1").

4. Dispositif d'éclairage selon l'une des revendications précédentes, dans lequel les moyens (4) pour la production de l'éclairage d'appoint de la pièce sont en outre conçus pour générer l'éclairage d'appoint dans différentes températures de couleurs, le dispositif de détection de lumière du jour (7) étant conçue en outre pour la détection d'une température de couleur de la lumière du jour,
les moyens (4) pour la production de l'éclairage d'appoint de la pièce étant en outre contrôlés de façon à ce que, lorsque la température de couleur de la lumière du jour augmente, l'éclairage de la pièce soit généré avec une température de couleur croissante.

5. Dispositif d'éclairage selon la revendication 4,
dans lequel les moyens (5) pour la production de l'éclairage local sont en outre conçus pour générer l'éclairage local dans différentes températures de couleurs,
les moyens (5) pour la production de l'éclairage local étant en outre contrôlés de façon à ce que, lorsque la température de couleur de la lumière du jour augmente, l'éclairage local soit généré avec une température de couleur croissante.

6. Procédé de contrôle d'un système d'éclairage pour l'éclairage d'une pièce (*R*), comprenant les étapes suivantes :
a) détection si au moins une personne (*P*) est présente dans la pièce (*R*),
b) contrôle de moyens (4) pour la production d'un éclairage d'appoint de la pièce sur de grandes surfaces, qui sont conçus pour générer une émission de lumière sur une grande surface à partir d'une zone du plafond (2) de la pièce (*R*) et pour générer l'éclairage d'appoint de la pièce dans différentes intensités, ainsi que de moyens (5) pour la production d'un éclairage local concentré, l'éclairage d'appoint de la pièce sur une grande surface étant contrôlé automatiquement en fonction de la lumière du jour ou en fonction de l'heure et
l'éclairage local étant contrôlé automatiquement en fonction de la présence d'au moins une personne (*P*) dans la pièce (*R*),
les moyens (5) pour la production de l'éclairage local étant conçus pour générer, dans au moins une parmi plusieurs parties (1, 1', 1") se trouvant en dessous d'une zone du plafond (2) de la pièce (*R*), un éclairage de travail,
les moyens (5) pour la production de l'éclairage local étant contrôlés de façon à ce que seules la partie (1, 1', 1") dans laquelle l'au moins une personne (*P*) est présente soit éclairée ou, le cas échéant seules les parties (1, 1', 1") dans lesquelles l'au moins une personne (*P*) est présente soient éclairées,
une intensité d'une lumière du jour régnant dans la pièce (R) étant en outre détectée,
**caractérisé en ce que**
les moyens (5) pour la production de l'éclairage local restent activés tant qu'au moins une personne (*P*) est présente dans au moins une des parties (1, 1', 1") et que l'intensité de la lumière du jour est en dessous d'une valeur seuil et restent désactivés tant que l'intensité de la lumière du jour dépasse la valeur seuil,
et **en ce que** les moyens (4) pour la production de l'éclairage d'appoint de la pièce sont contrôlés de façon à ce que, lorsque l'intensité de la lumière du jour augmente, l'éclairage d'appoint est généré avec une intensité croissante.

7. Procédé selon la revendication 6,
dans lequel les moyens (5) pour la production de l'éclairage local restent activés tant qu'aucune personne (*P*) n'est présente dans au moins une des parties (1, 1', 1").

8. Procédé selon la revendication 6 ou 7,
dans lequel, en outre, une température de couleur de la lumière du jour régnant dans la pièce (*R*) est détectée,
les moyens (5) pour la production de l'éclairage d'appoint de la pièce étant contrôlés de façon à ce que, lorsque la température de couleur de la lumière du jour augmente, l'éclairage d'appoint de la pièce est généré avec une température de couleur croissante.

9. Procédé selon la revendication 8,
dans lequel les moyens (5) pour la production de l'éclairage local sont en outre contrôlés de façon à ce que, lorsque la température de couleur de la lumière du jour augmente, l'éclairage local soit généré avec une température de couleur croissante.
